Europäisches Patentamt

European Patent Office

Office européen des brevets

(11) Publication number: **0 282 735 B1**

## EUROPEAN PATENT SPECIFICATION

(45) Date of publication of patent specification: **06.05.92**     (51) Int. Cl.⁵: **G06F 1/04**

(21) Application number: **88101998.8**

(22) Date of filing: **11.02.88**

Divisional application 91114922.7 filed on 11/02/88.

(54) **Clock signal supply system.**

(30) Priority: **20.03.87 JP 63762/87**
**08.06.87 JP 141459/87**
**08.06.87 JP 141460/87**

(43) Date of publication of application:
**21.09.88 Bulletin 88/38**

(45) Publication of the grant of the patent:
**06.05.92 Bulletin 92/19**

(84) Designated Contracting States:
**DE FR GB**

(56) References cited:
**EP-A- 0 012 186**

**IBM TECHNICAL DISCLOSURE BULLETIN volume 18, no. 6, November 1975, pages 1912-1913; G. Koetzle: "Computer clock distribution system with programmable delay and automatic adjustment"**

(73) Proprietor: **HITACHI, LTD.**
**6, Kanda Surugadai 4-chome**
**Chiyoda-ku, Tokyo 101(JP)**

(72) Inventor: **Masuda, Noboru**
**Hitachi Keimeiryo 14-13, Honda-3-chome**
**Kokubunji-shi(JP)**
Inventor: **Kamikawai, Ryotaro**
**2196-258, Hirai**
**Hinodemachi Nishitama-gun Tokyo(JP)**
Inventor: **Yagyu, Masayoshi**
**Tokiwaso 11-12, Honda-3-chome**
**Kokubunji-shi(JP)**
Inventor: **Yamamoto, Masakazu**
**Hitachi Suzuki Shinden Shataku**
**B3-5, 1473, Josuihoncho Kodaira-shi(JP)**
Inventor: **Itoh, Hiroyuki**
**A3-2, 1473, Josuihoncho**
**Kodaira-shi(JP)**
Inventor: **Saito, Tatsuya**
**1-3, Higashikoigakubo-3-chome**
**Kokubunji-shi(JP)**

Rank Xerox (UK) Business Services
(3.08/2.19/2.0)

**IBM TECHNICAL DISCLOSURE BULLETI** volume 24, no. 2, July 1981, pages 895-897; **A. Blum: "Automatic adjustment of several decentrally generated clock pulse sequences of a computer dis- tributed over several VLSI chips"**

**IEEE JOURNAL OF SOLID-STATE CIRCUIT** volume SC-17, no. 1, February 1982, pages 51-56; **F. Anceau: "A synchronous approach for clocking VLSI systems"**

**IBM TECHNICAL DISCLOSURE BULLETIN** volume 20, no. 11B, April 1978, pages 4889-4890; **D.S.Garriss: "Switchable clock generator"**

**PATENT ABSTRACTS OF JAPAN volume 8, no. 271 (P-320) (1708) 12th December 1984;**

**PATENT ABSTRACTS OF JAPAN volume 6, no. 162 (P-137) (1040) 25th August 1982;**

**PATENT ABSTRACTS OF JAPAN volume 9, no. 50 (P-339) (1773) 5th March 1985;**

**PATENT ABSTRACTS OF JAPAN volume 7, no. 30(P-173) (1175) 5th February 1983;**

**PATENT ABSTRACTS OF JAPA volume 6, no. 168 (P-139) (1046) 2nd September 1982;**

(74) Representative: **Patentanwälte Beetz sen. - Beetz jun. Timpe - Siegfried - Schmitt-Fumian Steinsdorfstrasse 10 W-8000 München 22(DE)**

## Description

The present invention relates to a clock signal supply system and a respective supply method, or more in particular to a clock signal supply system suitably used with a clock supply section of a main-frame computer capable of high-speed arithmetic processing. Such a system and respective method is referred to in the generic parts of the two independent claims.

In a conventional method generally employed for adjusting the phase of a clock signal for a main-frame computer facing the problem of a phase shift, the waveform of the clock signal for each destination is observed manually with oscilloscope or the like to set the phase to a predetermined value.

A method not using any oscilloscope has been disclosed, on the other hand, in JP-A-6 139 619, an application for which was filed by Nippon Electric Co., Ltd. on July 30, 1984, in which a clock supply circuit constitutes a ring oscillator, from the oscillation frequency of which a signal delay time of the clock supply circuit is detected to adjust the signal delay to a predetermined value.

Manual phase adjustment of a clock signal with oscilloscope or the like requires a considerable labor and therefore is difficult to effect at a great number of points. It is thus inevitable to conduct phase adjustment at several tens to several hundred centralized relay points with the signal sent unadjusted to destinations at further ends. The resultant variations in signal transmission time without adjustment constitutes a limit of the clock skew reduction. If the adjustment procedure which has thus far been handled manually is to be automated directly, it is necessary to place a probe in contact with a waveform observation point corresponding to each adjustment point sequentially, thereby requiring a mechanical positioning means for contact. In the case where a great number of adjustment points is involved, therefore, contact points would be so congested that the probe positioning procedure requires a high accuracy and rapidity, thus making the realization thereof difficult. If a signal line for the probe is installed separately for each waveform observation point, a mechanical positioning procedure would be eliminated. Such a method, however, would require that the signal transmission time for the signal lines for the probes connected to the waveform observation points are all uniform. The process of making uniform the signal transmission time for the signal lines connected to the waveform observation points is accompanied by substantially the same amount of labor as the phase adjustment of clock signals.

The method disclosed in JP-A-6 139 619 described above, which also requires that all signal transmission time of the cables for returning from destinations to input points are uniform, poses the same problem as the aforementioned one after all.

Especially in a main-frame computer, the machine cycle is expected to shorten more and more with the increase in the speed of arithmetic processing. As a result, it is necessary to increase the phase adjustment points for reducing the clock skew. In view of this, the above-mentioned problem provides an important task to be overcome.

The conventional systems thus have the shortcoming that an increase in the number of phases of a clock signal leads to a proportionately increased number of adjustment points, thereby requiring an increased adjustment labor. On the other hand, a higher speed of a clock signal causes the rise time or fall time to approach the clock period with the result that a fall may begin before a sufficient voltage rise at the destinations of the clock signals. The clock signal amplitude is thus reduced with less noise margin, sometimes extinguishing the clock signal itself. Phase adjustment therefore becomes more difficult. This phenomenon is liable to occur especially in a long signal line between a clock source and each destination where the load or skin effect is conspicuous. In this respect, the method of adjusting the phase of a clock signal disclosed in JP-A-6 139 650 and JP-A-6 139 651, an application for which was filed by Fujitsu, Ltd. in Japan on July 28, 1984 and an example of a variable delay circuit disclosed in JP-A-62 242 410, an application for which was filed by Mitsubishi Electric Corporation on April 14, 1986, do not provide sufficient means to prevent the variations in pulse duration or attenuation of the signal amplitude or extinction of the signal.

Automatic adjustment of the phase of a clock signal for a computer or the like often gives rise to a hazard or other difficulties if the control mechanism for the automatic adjustment is kept in operation. After complete adjustment, therefore, it is desirable to stop the control mechanism. In that case, however, a small phase shift that occurs after shut down of the control mechanism is hard to compensate for. The resulting variation, though small as compared with the phase shift to be adjusted, makes up a proportion not ignorable if the tolerance against the phase shift is reduced. In order to compensate for this, it is necessary to decide whether the phase shift is of a degree below the tolerance and, if it exceeds the tolerance, to issue an alarm signal for readjustment.

Conventional phase comparator circuits, as disclosed in Analog Data Manual (June 1983) of Signetics, for example, have only the function to decide which of given two signals is advanced but have not any function to detect the phase difference between them or to issue an alarm signal when the difference is considerable.

A system corresponding to the generic part of claim 1 is known from "IEEE Journal of solid-state circuits", vol. SC-17, no. 1, Feb. 1982, pages 51-56. It discloses a clock signal supply system in a main-frame computer having a plurality of blocks, each of said blocks being a clock signal destination,
comprising:

- means for generating a clock signal, providing a clock signal supplied to all of the blocks,
- first dividing means operating in dependence of the clock signal so as to provide a reference signal being supplied to all of the blocks and having a lower frequency than the clock signal,
- first signal lines transmitting said clock signal from said means transmitting said clock signal from said means for generating a clock signal to each of said blocks,
- second signal lines transmitting said reference signal from said first dividing means to each of said blocks,
- in each of said blocks separated phase shifting means so as to provide a variable delay of an inputted signal-to-be-shifted in accordance with an inputted shift control signal, and
- in each of said blocks separated phase comparing means so as to provide said shift control signal in response to a phase relation of inputted signals.

Within each of the destinations said auxiliary signal is obtained by dividing said shifted clock signal.

The document IBM Technical Disclosure Bulletin, vol. 18, No. 6, November 1975, pages 1912-1913, shows a computer clock distribution system with clock pulses generated by an oscillator, which are transmitted via one or several line drivers to individual building blocks (cards). Powering chips distribute the signals further within the card. Via lines of equal length, one output line of each board is fed to an associated pulse sense chip which also receives a direct reference signal from a clock shaper. The sense chips are controlled to compare the output of one powering chip at a time with the reference signal. The output signal of the sense chips is analysed further in an adjustment circuitry. Via a control circuitry it in turn transmits indicating signals to a service processor, enabling the latter to change in an iterative way programmable delay circuits until the desired relationship between the signals has been obtained.

## SUMMARY OF THE INVENTION

It is an object of the present invention to overcome the above-mentioned problems and to provide a system and a method for automating accurate phase adjustment of clock signals.

This object is solved by the features of the two independent claims, dependent claims are directed on preferred embodiments of the present invention.

There are provided means for automatically adjusting the phase of a clock signal at each destination thereof and also a signal line for supplying each phase adjusting means with a reference signal used for phase adjustment of clock signals, separtely from a signal line for supplying the clock signals.

## BRIEF DESCRIPTION OF THE DRAWINGS

Fig. 1 is a diagram showing a configuration of a first embodiment of the present invention.

Figs. 2 to 12 are diagrams showing component elements of the first embodiment and respective waveforms in detail.

Figs. 13 to 18 are diagrams for explaining a differential circuit usable in combination with the present invention.

Figs. 19A, B are diagrams for explaining a supplemental effect of the embodiment shown in Fig. 12.

Fig. 20 is a circuit diagram showing a further embodiment of the present invention.

Fig. 21 is a diagram showing waveforms for explaining the operation of a variable delay circuit.

Fig. 22 is a circuit diagram showing an example of improvement in the variable delay circuit.

## DESCRIPTION OF THE PREFERRED EMBODIMENTS

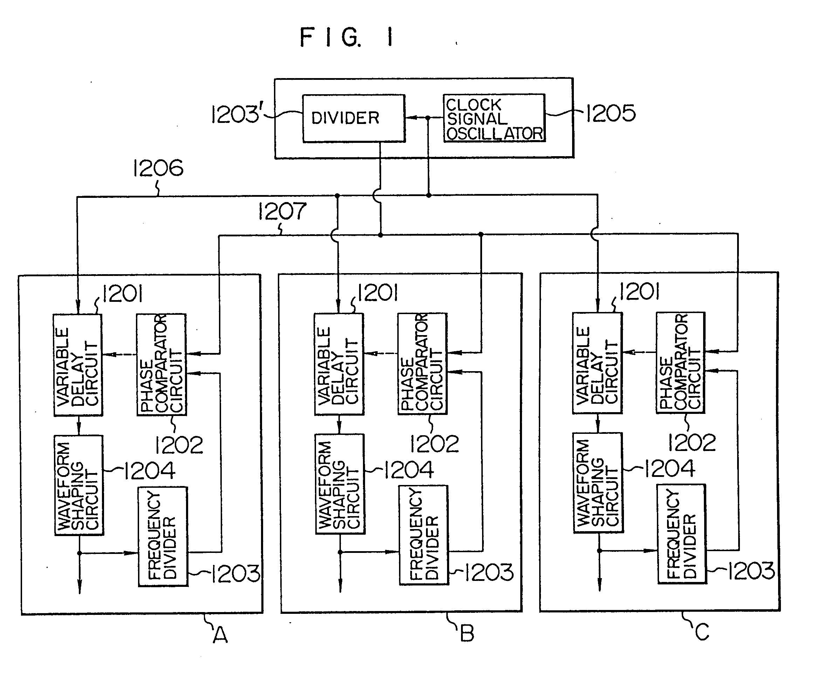

Embodiments of the present invention will be explained below with reference to the accompanying drawings. Fig. 1 shows a configuration of a first embodiment of the present invention.

In Fig. 1, numeral 1205 designates a clock oscillator, characters A, B and C destinations of the clock signals from the clock oscillator 1205 to the phase adjusting circuit in each destination, and numeral 1203' a reference signal generation circuit for forming a reference signal used for phase adjustment, which reference signal generator is provided by a frequency divider for frequency-dividing a clock signal generated by the clock oscillator 1205 according to this embodiment. Numeral 1207 designates a second signal line for supplying a reference signal formed by the frequency divider 1203', i.e., a reference signal generation circuit, to the phase adjusting circuit included in each destination of the clock signal.

Each of the phase adjusting circuits arranged in the clock signal destinations A, B and C includes a variable delay circuit 1201 for controlling the delay time of a receiving clock signal, a waveform shaping circuit 1204 for shaping the signal through the variable delay circuit 1201 into a desired clock signal waveform, a frequency divider 1203 for dividing the resulting clock signal in frequency, and a phase comparator circuit 1202 for comparing the output phase of the frequency divider 1203 with the phase of the receiving reference signal transmitted through the second signal line 1207. The signal delay time of the variable delay circuit 1201 is adjusted so that by feeding back the result of comparison at the phase comparator circuit 1202 to the variable delay circuit 1201, the output signal of the frequency divider 1203 is in phase with the signal transmitted via the second signal line 1207.

The second signal line 1207 is wired to each destination over the same length in order to secure the same signal transmission time. By setting the phase of the clock signals supplied to the destinations to the phase of the reference signal, therefore, the phases of all the clock signals distributed among the destinations come to coincide with each other.

Now, the operation of the circuit shown in Fig. 1 will be explained. A clock signal generated in the clock oscillator 1205 is supplied to the phase adjusting circuits in the respective destinations A, B and C by the first signal line 1206. The waveform of this clock signal may be either rectangular or sinusoidal. Also, the signal transmission time to each destination over the first signal line 1206 are not necessarily accurately identical to each other. Therefore, it is possible to insert an amplifier at a given position along the signal line 1206 or a waveguide may be used or the clock signal may be converted into an optical signal to permit transmission of a signal of short period.

The second signal line 1207 is for transmitting the output of the clock oscillator 1205 frequency-divided by the frequency-divider 1203' making up a reference signal generator, which signal is used as a reference for phase adjustment at each destination. The period of the signal passing through the second signal line 1207, therefore, is longer than that of the signal passing through the first signal line 1206 and is less liable to cause the attenuation of the signal amplitude or the like. It is, however, necessary to secure the same length of all the signal transmission time from the frequency divider 1203' to the phase comparator circuit 1202 in the phase adjusting circuit at each destination.

The clock signal that has arrived at each of the phase adjusting circuits in the destinations A, B and C through the first signal line 1206 is applied to the variable delay circuit 1201 and the phase thereof adjusted by a predetermined amount described later. The output of the variable delay circuit 1201 is applied to the waveform shaping circuit 1204 for shaping the same into a desired clock signal waveform and producing a shaped signal as an output. A part of this output signal is applied to the frequency divider 1203, and the signal thus frequency-divided is applied to the phase comparator circuit 1202 for comparison with the phase of a receiving reference signal supplied to each of the destinations A, B and C through the second signal line 1207. The phase comparator circuit 1202 compares this clock signal with the phase of the received reference signal, and applies to the variable delay circuit 1201 a signal for delaying the phase of the received clock signal by an amount required for coincidence between the phases of the two signals. The signal transmission time over the second signal line 1207 for all the destinations are adjusted to coincide with each other, and therefore all the clock signals produced from the phase adjusting circuits in the respective destinations coincide with each other.

A specific method of realizing the component parts used in the embodiment of Fig. 1 will be explained below.

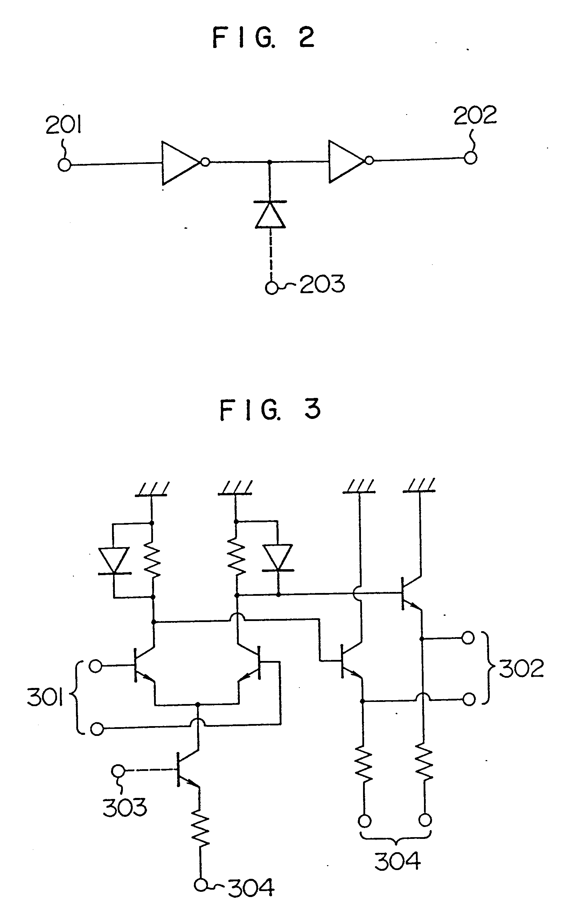

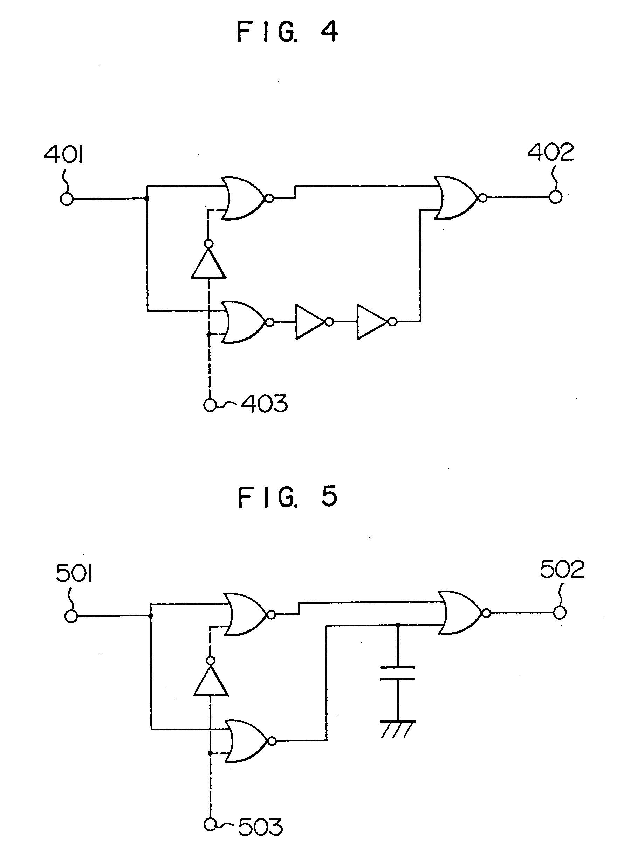

Figs. 2 to 5 show some examples of the variable delay circuit 1201 in Fig. 1. In the circuit of Fig. 2, the delay time is controlled by changing the load capacity connected to the output of the left gate circuit (left inverter) according to the control voltage applied to a control terminal 203 by taking advantage of the fact that the coupling capacity of a diode changes with the applied voltage. Fig. 3, on the other hand, shows a circuit in which a current flowing in a differential circuit is controlled by changing the control voltage 303 and the current for charging a coupling capacitance of a clamping diode is adjusted thereby to control and produce at 302 the delay time of an input signal. The terminal 304 is connected to a power supply. This circuit is used with a differential signal applied to the input terminals 301 or an intermediate-level voltage applied to one of the input terminals 301. This circuit is capable of controlling the delay time at the time of fall but not virtually that at the time of rise. If the output is not used in differential way, therefore, the pulse duration changes. In order to avoid this inconvenience, the circuit of Fig. 2 may be used in double stages. The circuits shown in Figs. 4 and 5 are variable delay circuits of digital control type in which the delay time depends on whether the signal is passed through the upper or lower line. These circuits cannot be continuously controlled unlike the analog control type of circuits shown in Figs. 2 and 3, but are easily used to increase the variable amount of delay time. Especially, the circuit of Fig. 4 has the advantage that the pulse form remains unchanged substantially with the increase in the change of the delay time. If a variable delay circuit used with the present invention is to be configured only of a circuit of digital control type, it is necessary to connect several circuits of different changes in delay time in multiple stages. It is also possible to use a circuit of digital control type and one of analog control type in combination.

In the case where a variable delay circuit of digital control type is used as shown in Figs. 4 and 5, what is called the "hazard" is liable to occur in switching the delay time. This can be prevented by a method in which the timing of switching the delay time is synchronized with the input signal of this circuit so that the output signal remains unchanged even after switching. Another preventive method is by turning off the operation of the control system to prevent the delay time from changing after phase adjustment is complete. These two methods may of course be used in combination.

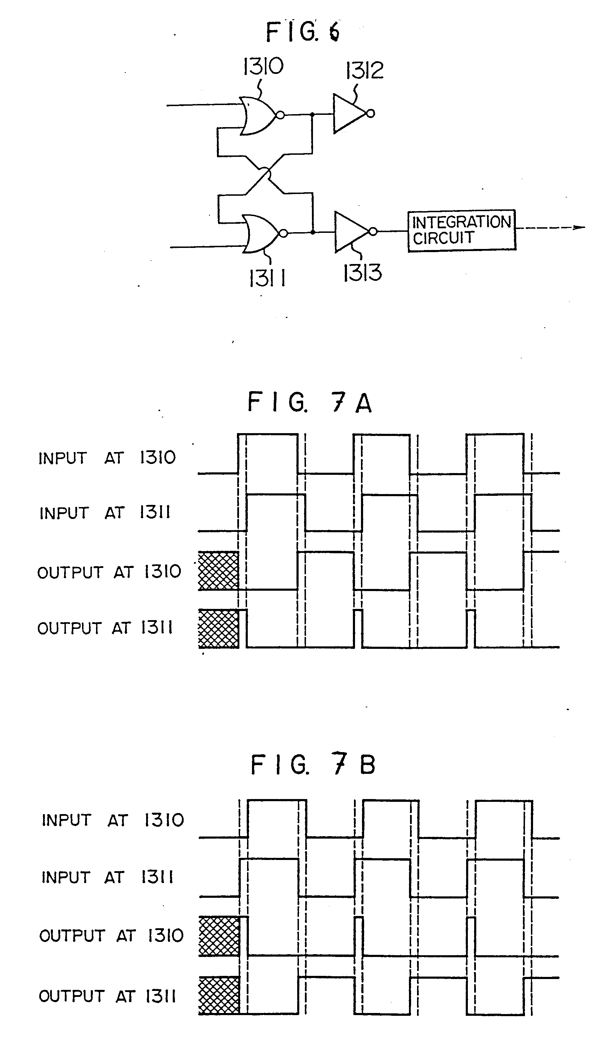

Fig. 6 is a diagram showing an example of a phase comparator circuit. If a circuit of such a type that the delay time thereof decreases with the increase in control voltage is used as the variable delay circuit 1201 in Fig. 1, for instance, the received reference signal transmitted via the second signal line 1207 in Fig. 1 is applied to the gate circuit 1310 of Fig. 6 and the output of the frequency divider 1203 to the gate circuit 1311. Also, the time constant of the integration circuit is set sufficient long as compared with the period of the signal applied to the gate circuit 1310 or 1311. The relationship between the input and output of the gate circuits 1310 and 1311 is shown in Figs. 7A and 7B. The output waveforms in Figs. 7A and 7B ignore the delay time in the gate circuits 1310 and 1311. In the case where the phase of the signal applied to the gate circuit 1311 is retarded from that of the signal applied to the gate circuit 1310, the average output of the gate circuit 1311 assumes a value near to the low level as shown in Fig. 7A. This output is applied through a buffer inverter circuit 1313 to an integration circuit, so that the average output of the inverter circuit 1313 takes a value proximite to the high level, with the result that the output voltage of the integration circuit steadily increases thereby shortening the delay time of the variable delay circuit 1201. The phase of the signal applied to the gate circuit 1311 is thus advanced. In the case where the phase of the signal applied to the gate circuit 1311 is advanced of that of the signal applied to the gate circuit 1310, by contrast, the average output of the gate circuit 1311 assumes a value near to the average of the low and high levels as shown in Fig. 7B, and the output voltage of the integration circuit steadily decreases, thereby retarding the phase of the signal applied to the gate circuit 1311. As a result, the signals applied to the gate circuit 1310 and the gate circuit 1311 are almost in phase with each other under steady condition. Incidentally, the gate circuit 1312 is a dummy gate circuit for matching the load conditions of the gate circuits 1310 and 1311. Also, if the gate circuits 1310 to 1313 are arranged in close proximity to each other within a single integrated circuit, the delay time difference between the gate circuits 1310 and 1311 is reduced, thereby improving the accuracy of phase adjustment.

The clock oscillator 1205 in Fig. 1 may be configured the same way as the conventional clock oscillator used with the computers. A method of configuring the frequency divider, which is described in various forms of circuits in catalogs dealing with a small scale integrated circuit, will not be described herein. Also, the waveform shaping circuit 1204, if used only for the purpose of transforming into a rectangular wave, may include only an amplifier and a clamp circuit or the like, but if an accurate shaping of a pulse duration is also desired, a one-half frequency divider will be capable of producing a waveform having a duty cycle of almost 50%. The use of a counter circuit, on the other hand, would make possible setting to other duty cycles. The foregoing is a description of an example of a specific circuit according to the embodiment of Fig. 1.

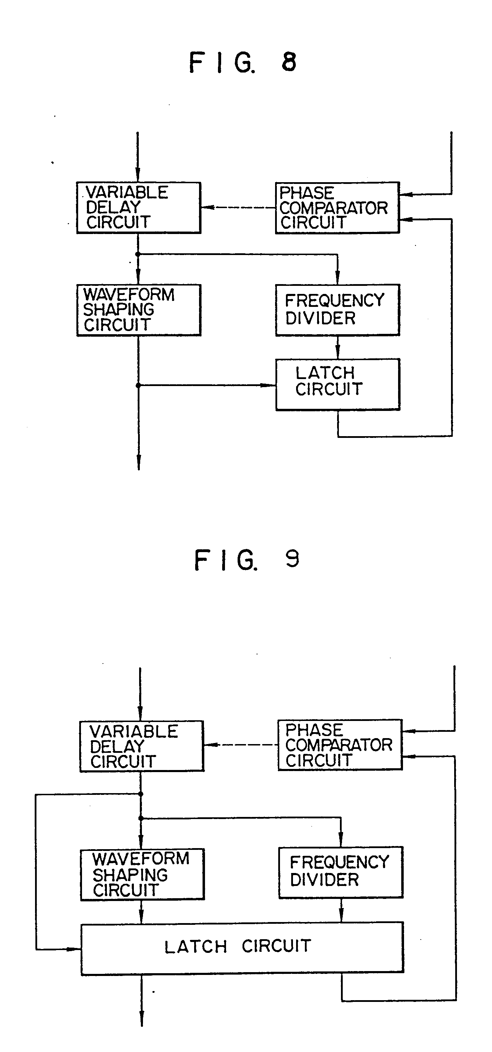

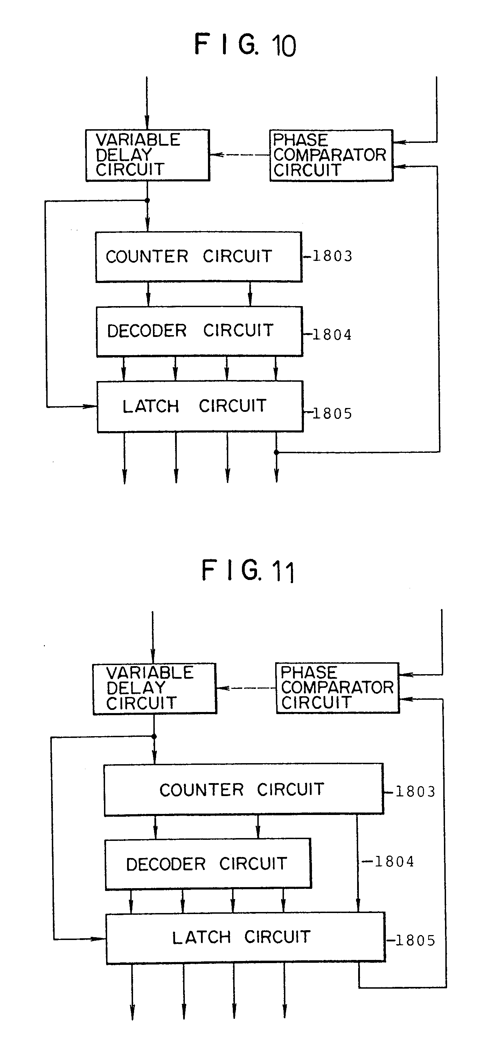

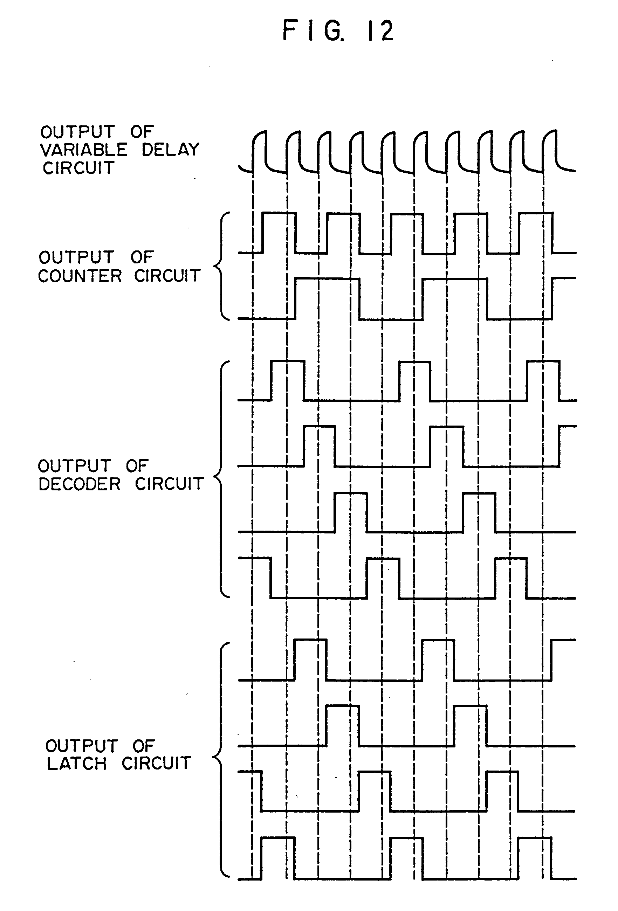

Figs. 8 to 11 show a further embodiment of the phase adjusting circuits. The phase adjusting circuits arranged in the destinations A, B and C in Fig. 1 may be replaced by any of those shown in Figs. 8 to 11 to embody the invention with equal effect. If a latch circuit as shown in Fig. 8 or 9 is inserted, on the other hand, the variations in delay time of the frequency dividers of the phase adjusting circuits are absorbed, and therefore the accuracy of phase adjustment of clock signals is improved. Also, in the case where transmission of multi-phase clock signals or a clock signal of a duty cycle other than 50% is desired, a counter circuit like the one shown in Fig. 10 or Fig. 11 is recommended. Fig. 10 and Fig. 11 show an embodiment in which clock signals of four phases with a duty cycle of 25% are transmitted. In said embodiments of the invention the second dividing means comprise a counter circuit 1803, a decoder circuit 1804 and a latch circuit 1805. Fig. 12 shows an example of output waveforms produced from the variable delay circuit, the counter circuit, the decoder and the latch circuit. There are a number of gates between the output of the variable delay circuit and that of the decoder circuit, and therefore the number of gates is not always the same for all the routes therebetween. The phase difference between the output signals of the decoder circuit is therefore not always fixed. By providing a latch circuit, however, all the phase differences and pulse durations for all phases can be set to the period of the output of the variable delay circuit or an integral multiple thereof. As a result, if only one of the phases is adjusted as shown in Fig. 10, the other phases are adjusted automatically. When it is desired to lengthen the period of a reference signal more than that of the clock signal, on the other hand, a solution is to separate a reference signal from the clock signals. Generally, signal wiring on the exterior of an integrated circuit is longer than that on the interior thereof, and is harder to transmit a high-speed pulse. Therefore, even though it is possible to use a clock signal of a short period within an integrated circuit, it may be impossible to transmit a reference signal of the same period with high accuracy. In such a case, a configuration as shown in Fig. 11 provides an effective application.

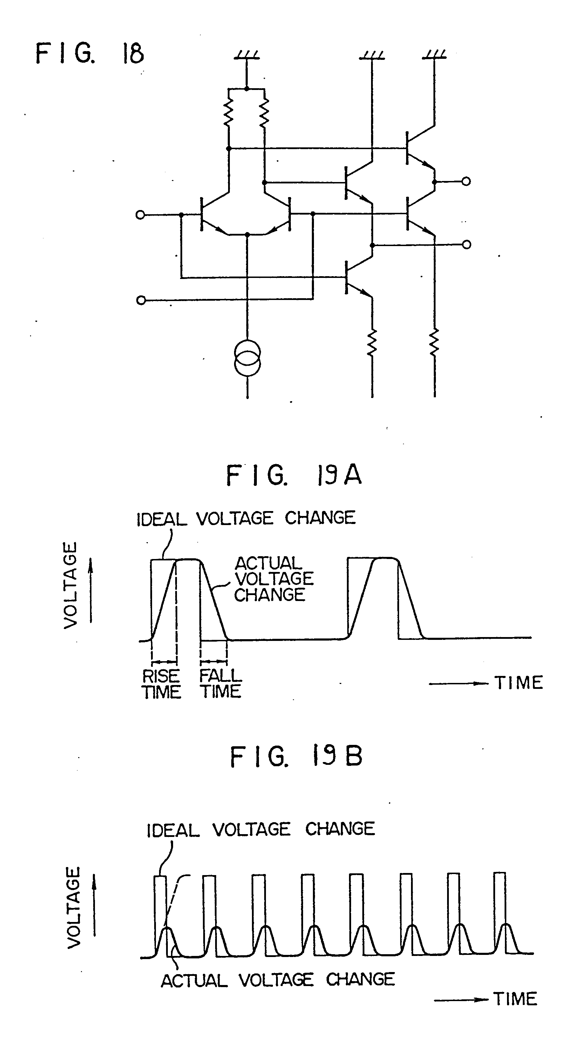

When a pulse signal passes through a signal line, it is not true that the voltage changes instantaneously from low to high level (or the other way), but as shown in Fig. 19A, the change is a gradual process requiring a certain rise (or fall) time. This rise or fall time, if shorter than the pulse duration of the clock signal, poses no serious problem. When the pulse duration of the clock pulse is shortened to increase the speed thereof, however, a fall begins before full rise of the voltage as shown in Fig. 19B, resulting in a smaller signal amplitude. The noise margin is thus reduced, thereby changing or sometimes even extinguishing the pulse itself. Especially in the case where the signal line is long, such a phenomenon is liable to occur due to an increased load or a conspicuous skin effect. A method to prevent this phenomenon is either by increasing the number of stages of buffer circuits arranged midway of the signal line for more frequent pulse shapings or by preventing the rise or fall time from lengthening. Once such a preventive action is taken, however, variations of the signal delay time of the buffer circuit would be so accumulated as to aggravate the change in pulse duration or phase variations.

Since there is no need of taking into consideration the phase change over a signal line where high frequency signal passes, the embodiment shown in Fig.1 described above permits pulses to be shaped by a buffer circuit added at a given position. Further, if a sinusoidal wave is formed midway of a signal line, on the other hand, it is possible to reduce the chance of signal attenuation by use of an analog amplifier or the like. In the event that only the period of the clock signal is transmitted, therefore, it is possible to transmit a much shorter period than when the phase and pulse duration are transmitted at the same time. Even a signal line that is incapable of transmitting a signal of short pulse duration due to amplitude attenuation can transmit a signal of long pulse duration with a considerably stable phase.

As a consequence, if a high-frequency signal transmitted through the first signal line is shaped into a form usable as a clock signal and the transmission time of the first signal line is adjusted in such a manner that the clock signal is in phase with the signal of a reference signal high in phase accuracy transmitted through the second signal line, then a high speed clock signal is capable of being supplied with high phase accuracy.

The present invention, embodiments of which have been explained above, displays the effect thereof also when used in a plurality of stages with the circuit described below.

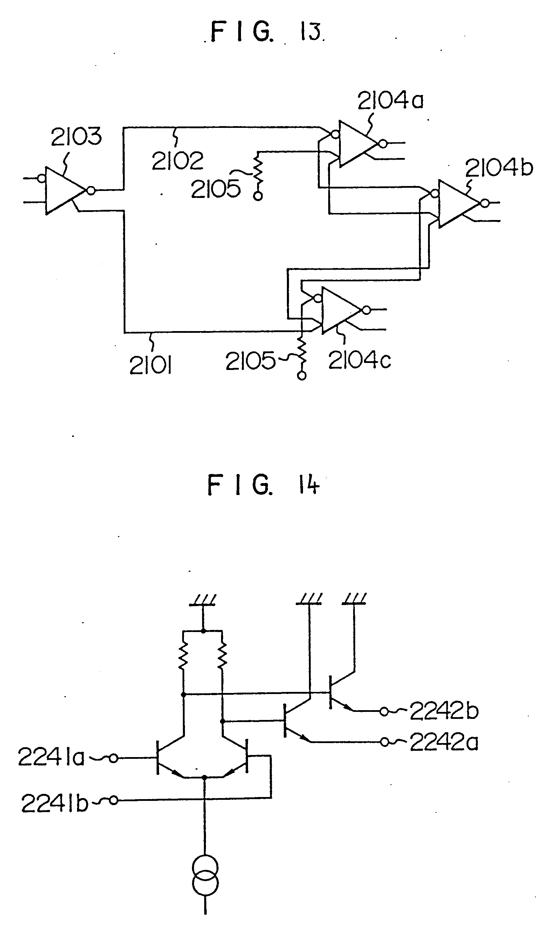

Fig. 13 is a diagram showing a configuration of such a circuit. In Fig. 13, numeral 2103 designates a source circuit providing a transmitting end of a clock signal, which is transmitted through a first signal line 2101 and supplied to sink circuits 2104c, 2104b and 2104a in that order at the receiving end. A reference signal complementary with the clock signal transmitted through the signal line 2101 is also transmitted from the source circuit 2103 through the second signal line 2102 to sink circuits 2104a, 2104b and 2104c in that order. The first and second signal lines 2101 and 2104 have substantially the same length between the sink circuits 2104a and 2104b as well as between the sink circuits 2104b and 2104c. The first signal line 2101 and the second signal line 2102 are connected to a terminal resistor 2105 after being connected with the last sink circuits thereof respectively.

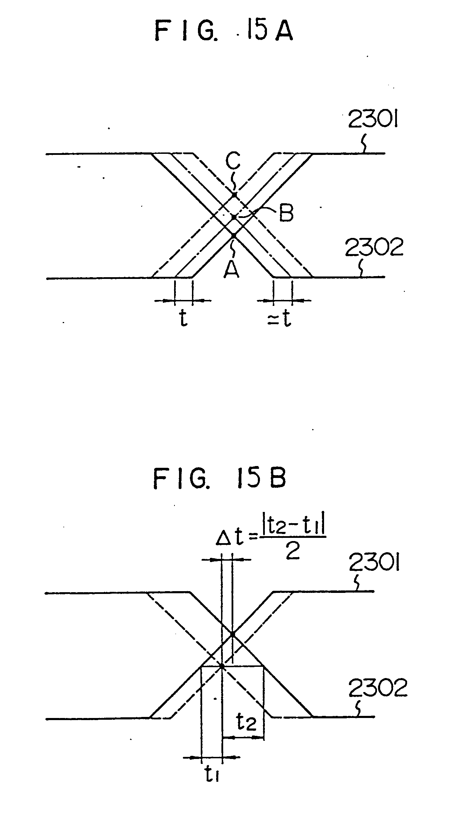

The sink circuits 2104a, 2104b and 2104c are differential circuits such as shown in Fig. 14. If the potential of an input point 2241a is higher than that of an input point 2241b, a "high" signal is produced at an output point 2242a and a "low" signal at an output point 2242b. If the potential of an input point 2241a is lower than that of the input point 2241b, on the other hand, a "low" signal is produced at the output point 2242a, and a "high" signal at the output point 2242b. In Fig. 13, the signal line 2101 is connected to the input point 2241a of this differential circuit, and the signal line 2102 to the input point 2241b thereof.

The operation of the circuit shown in Fig. 13 will be now explained with reference to Figs. 15A and 15B. In Fig. 15A, the solid line represents a waveform produced by the sink circuit 2104a, the one-dot chain a waveform in the sink circuit 2104b, and the dashed line a waveform in the sink circuit 2104c. Assume that the time of arrival of the clock signal at the sink circuit 2104a is t behind the time of arrival of the clock signal at̄ the sink circuit 2104b. In view of the fact that the wiring length of the signal line for the sink circuits 2104a and 2104b are substantially equal to each other, the time of arrival of a complementary signal at the sink circuit 2104a is about t advanced from that of arrival thereof at the sink̄ circuit 2104b. As a result, to the extent that the rise time of the clock signal is equal to the fall time of the complementary signal, the clock signal reaches the same level as the complementary signal at the input point of the sink circuit 2104a at a time point (A of Fig. 15A) which is substantially the same time point (B of Fig. 15A) where the clock signal reaches the same level as the complementary signal at the input point of the sink circuit 2104b. In similar fashion, the time point (C of Fig. 15A) when the clock signal reaches the same level as the complementary signal at the input point of the sink circuit 2104c is substantially the same as the time points A and B. Thus as far as the transition period of the clock signal occurs at the same time as the transition of the complementary signal for all the sink circuits, all the sink circuits are switched substantially at the same time. Fig. 15 shows waveforms of given two sink circuits at two different input points thereof in solid and dashed lines respectively. The value allowed as a difference between the delay time $t_1$ of the clock signal and the delay time $t_2$ of the complementary signal between these two points $|t_1 - t_2|$ is required to be double or less the value allowed as a time difference $\Delta t$ of switching of the two sink circuits, and the difference in wiring length for the clock and complementary signals between the sink circuits is required to take a value meeting this range. As will be understood from the foregoing description, it is possible to switch the sink circuits almost simultaneously without any wirings of equal length between the source circuit and each sink circuit or without any plurality of source circuits by supplying a clock signal to the sink circuits 2104a, 2104b and 2104c in that order and a complementary signal to the sink circuits 2104c, 2104b and 2104a in that order. In particular, it is not necessary that the wiring length for the clock signal from the source circuit 2103 to the sink circuit 2104c is equal to that for the reference signal from the source circuit 2103 to the clock circuit 2104a. As a result, the use of this circuit configuration reduces the number of source circuits, which in turn reduces the space occupied by the system, power consumption, package area with fewer wirings, and crosstalks. Further, there are less wirings and shorter wiring length needed for the same delay time, so that even with some variations in delay per unit wiring length, variation in switching time of the sink circuits is reduced. At the same time, the layout design of the clock signal wirings is facilitated.

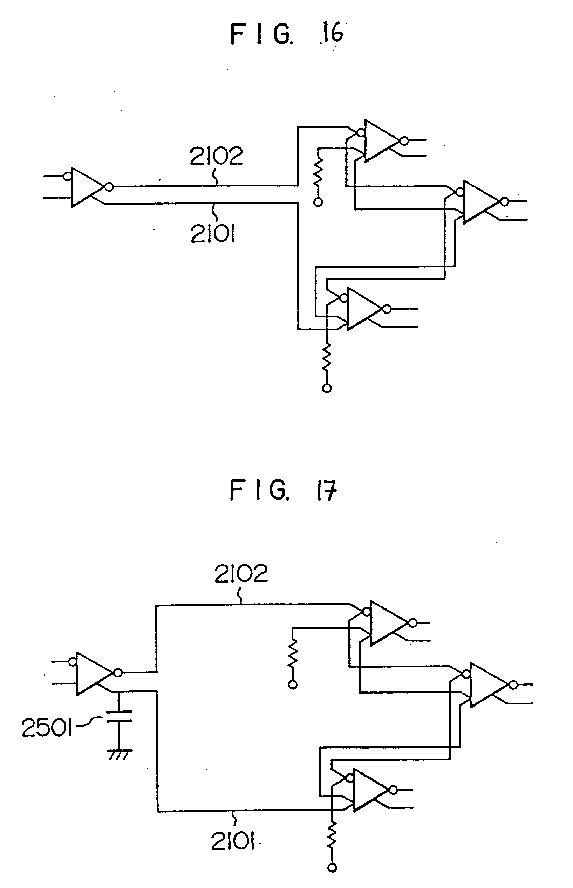

In the lines 2101, 2102 for the signal complementary with the clock signal are partially arranged in close proximity to each other as shown in Fig. 16, on the other hand, a noise induced in an external clock signal will induce a noise of substantially the same waveform in the complementary signal and is thus cancelled.

In the case where the rise time of the clock signal is different from the fall time of a complementary signal such as where the fall time of the clock signal is shorter than the fall time of the complementary signal, for instance, a capacitor 2501 may be added to the clock signal as shown in Fig. 17 to dampen the rise thereof. In such a case, the simultaneous switching of the sink circuits 2104a, 2104b, 2104c may not be assured in switching the polarity, that is, in switching the clock signal from "high" to "low" or the complementary signal from "low" to "high". Nevertheless, this does not pose any problem since a clock signal requires that only the leading or trailing edge of the pulse thereof be switched simultaneously.

Also, if a push-pull circuit as shown in Fig. 18 is used as a source circuit, on the other hand, the rise time is rendered equal to the fall time.

In the case where the circuit described above is combined with the present invention in a plurality of stages, the amount of wiring is reduced, thereby realizing a clock signal supply system which makes it possible to supply clock signals accurately with a smaller occupied area. These circuits may be used anywhere in a system for distributing clock signals. Specifically, it may be applied to any of the cases where a clock is distributed from a clock oscillator among a plurality of modules, where a clock signal is distributed among IC chips formed on modules, or where a clock signal is distributed among a plurality of circuits formed on IC chips.

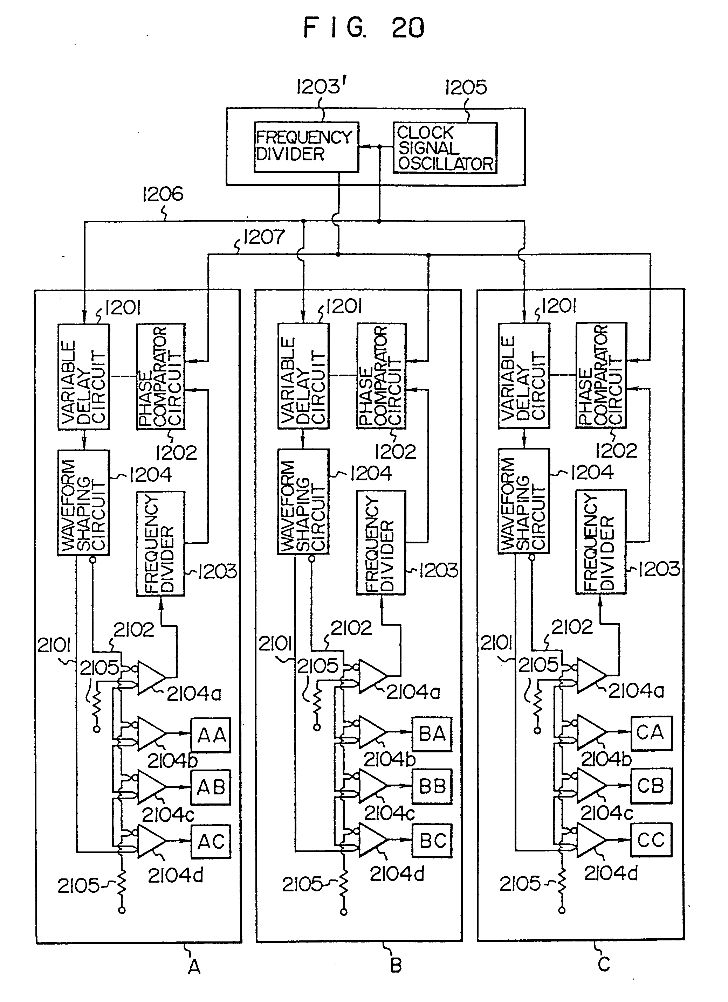

Fig. 20 shows an example in which the system according to the present invention (the circuit of Fig. 1) is combined with the aforementioned circuit in double stages. A clock signal is distributed among destinations A, B and C from the circuit of Fig. 1, and the clock signal is further distributed from the above-mentioned circuit among a plurality of sub-destinations AA, AB and AC in each of the destinations A, B and C. The use of a configuration shown in Fig. 20 makes it possible to supply a clock signal among a great number of destinations with a comparatively small number of wirings.

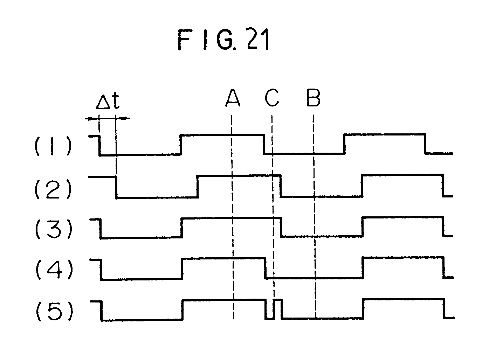

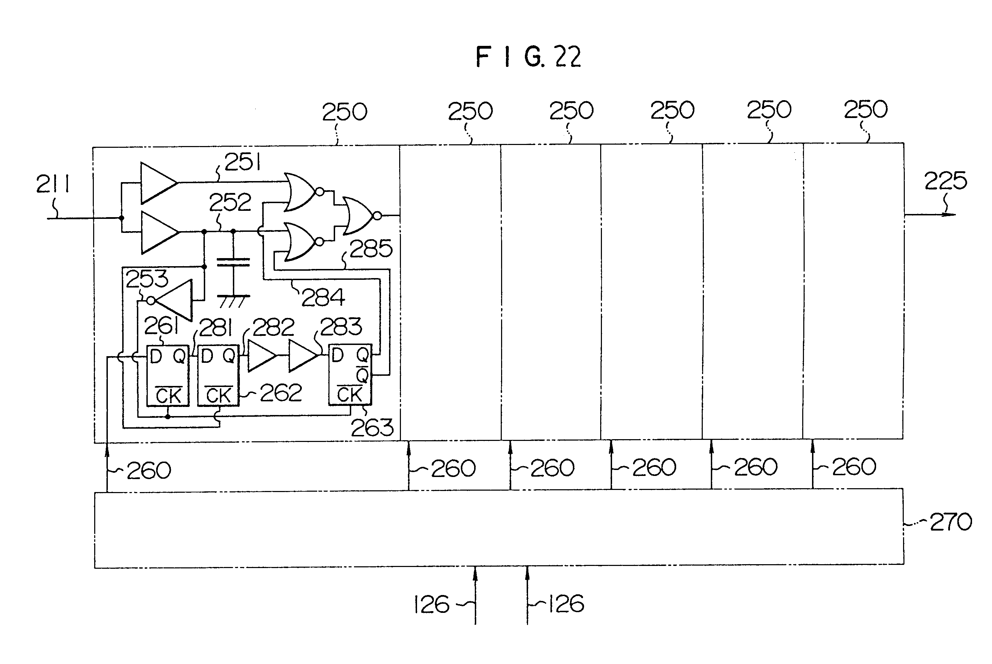

Now, explanation will be made of a hazard caused in switching the delay time of the variable delay circuit under digital control and a method of preventing the same. Fig. 21 shows an example of output waveforms produced from a variable delay circuit under digital control. (1) represents a case with a short delay time, and (2) an output waveform with a long delay time. The time lag Δt between these two outputs provides a switching width. Assume that the waveform (1) with short delay time is switched to the waveform (2) with long delay time when both waveforms (1) and (2) are "high" (that is, at a time point A in Fig. 21). The resulting output, as shown in (3) of Fig. 21, takes the same waveform as (1) before time point A and the same waveform as (2) after time point A while the number of pulses remains unchanged. The result is substantially the same as the switching at time A if the delay time is switched when both waveforms are "low" (that is, at time point B in Fig. 21) as shown by an output waveform thereof in (4). In the case where the delay time is switched at time point C when one waveform is "high" and the other "low", however, a short pulse is generated before and after the switching as shown in (5), thereby changing the total number of pulses. This phenomenon is what is called a "hazard" and is a probable cause of a malfunction. In conventional variable delay circuits of digital control type, a hazard is unavoidable as the delay time is switched in a way irrespective of an input or output signal, and it is necessary to avoid the effect thereof by suspending the control operation after completion of phase adjustment. If the switching of the delay time is effected always at time point A or B shown in Fig. 21, however, it will be possible to avoid a hazard. An example of a circuit configuration for achieving such a purpose is shown in Fig. 22.

In this circuit, an unadjusted clock signal 211 is applied to an input, and an output is produced as a clock signal 225. The process is divided into several blocks 250, for each of which the delay time is switched bit by bit. Each block has two signal lines of different transmission time, one of which is selected by a control signal 260 for each bit. The delay time switching width varies from one bit to another depending on the capacitance of a capacitor added to a node 252. Three latch circuits 261, 262, 263 are for preventing the delay time from being switched at other than time points A. In response to a command for lengthening or shortening the delay time by way of a control signal, the control circuit 270 switches the control signal 260 for each bit at a timing irrespective of the signals passing the node 251 or 252. As a result of the signal passing through the latch circuit 261 to the extreme left, the voltage appearing at the node 281 undergoes a change not more than a half cycle of the low voltage level at node 253. Further, the voltage appearing at the node 282 through the latch circuit 262 in the second stage is changed only when the node is at low level. Since the nodes 252 and 253 are opposite in polarity, however, both the nodes 281 and 282 are adapted for simultaneous change only for a very short time. In fact, the node 282 is capable of changing only for a short time immediately after the node 252 becomes "low". Similar delay procedures through several stages make it possible to prevent the voltage at the node 283 from changing other than when the node 252 is "high". Thus the voltage at the node 285 is capable of changing only for a moment immediately after the node 253 has become "low", which moment is determined primarily for each period of the input signal. If an arrangement is so made that both the nodes 251 and 252 become "high" at such a moment, therefore, the delay time never fails to switch at time point A in Fig. 21, thereby preventing the hazard. A configuration is also possible to switch the delay time at time point B also, but only on condition that it is necessary to make sure that both the nodes 284 and 285 do not become "high" at the same time. Fig. 22 shows an example in which the part for switching the line between the nodes 251 and 252 includes a NOR circuit. If this NOR circuit is to be replaced by a NAND circuit, an arrangement is necessary to switch the delay time at time point B or to switch the delay time at time A while at the same time preventing both the nodes 284 and 285 from becoming "low" at the same time. Fig. 22 shows a case including a capacitor for changing the delay time. If it is desired to increase the switching width, however, a change in the number of gates to change the delay time is more preferable for preventing deterioration of waveforms. Further, the effect of a hazard can be prevented more positively by combined use of a method of stopping the control of the variable delay circuit after completion of phase adjustment and a method using the circuit of Fig. 22 at the same time.

The circuit of Fig. 22 may be used as the variable delay circuit in any of the described embodiments.

## Claims

1. A clock signal supply system used in a main frame computer having a plurality of blocks (A, B, C), each of said blocks (A, B, C) being a clock signal destination, comprising:
   - means (1205) for generating a clock signal, providing a clock signal supplied to said blocks (A, B, C),
   - first dividing means (1203') operating in dependence of the clock signal so as to provide a reference signal being supplied to said blocks (A, B, C) and having a lower frequency than the clock signal,

- first signal lines (1206) transmitting said clock signal from said means (1205) for generating a clock signal to each of said blocks (A, B, C),
- second signal lines (1207) transmitting said reference signal from said first dividing means (1203') to each of said blocks (A, B, C,),
- in each of said blocks (A, B, C) separated phase shifting means (1201) so as to provide a variable delay of an inputted signal-to-be-shifted in accordance with an inputted shift control signal,
- in each of said blocks (A, B, C) separated phase comparing means (1202) so as to provide said shift control signal in response to a phase relation of inputted signals;
  whereby in each of said blocks (A, B, C) the first signal lines (1206) are connected to the phase shifting means (1201) so as to provide the signal-to-be-shifted for the phase shifting means (1201), and the second signal lines (1207) are connected to a first input of the phase comparing means (1202) so as to provide a first signal thereof;
  **characterized** in that
- the second signal line (1207) is wired to each destination with the same length in order to secure the same transmission time;
- second dividing means (1203, 1803-1805) implemented by a frequency divider are provided operating in dependence on the output of the phase shifting means (1201) and having their output connected to a second input of the phase comparing means (1202) so as to provide a second input signal thereof; and
- the signal delay time of the variable delay circuit (1201) is adjusted so that by feeding back the result of comparison at the phase comparing means (1202) to the variable delay circuit (1201), the output signal of the frequency dividing means (1203) is in phase with the signal transmitted via the second signal line (1207).

2. A clock signal supply system according to claim 1, characterized in that said second dividing means (1203, 1803-1805) are formed by a counter circuit (1803) and a latch circuit (1805) connected thereto, and a decoder circuit (1804) interposed between them.

3. A clock signal supply system according to claim 1 or 2, characterized in that said first dividing means (1203') provides a reference signal (1207) by dividing the frequency of the clock signal generator (1205) according to an integral dividing factor equal or greater than two.

4. A clock signal supply system according to one of the claims 1 to 3, characterized in that the second dividing means (1203, 1803-1805) generate a signal having the same frequency as the reference signal.

5. A clock signal supply system according to one of the claims 1 to 4, characterized in that the phase shifting means (1201, 1801) are controlled digitally.

6. A clock signal supply system according to one of the claims 1 to 5, characterized in that the phase shifting means (250-270) comprise latch circuits (261-263) so as to prevent occurrence of additional pulses when shifting an input signal.

7. A method for supplying a clock signal for use in a main frame computer, said computer having a plurality of clock signal destinations (A, B, C) comprising the steps of:
   - generating a clock signal (1205) being supplied (1207) to said destinations (A, B, C),
   - generating a reference signal (1203') being supplied to said destinations,
   - comparing (1202) within each of said destinations said reference signal (1203') with an auxiliary signal so as to provide a shift control signal,
   - shifting (1201) within each of said destinations the clock signal (1205) in response to said shift control signal,
     **characterized** in that
   - said reference signal (1203') is supplied (1207) to said destinations (A, B, C) in a substantial equal transmission time,
   - within each of said destinations said auxiliary signal is obtained by dividing (1203) the frequency of said shifted (1201) clock signal (1205), and
   - said clock signal (1205) is shifted (1201) such that the divided (1203) signal is in phase with said reference signal (1203') in each of said destinations (A, B, C).

**8.** A method according to claim 7, characterized in that the frequency of said shifted clock signal is divided by counting, decoding and latching.

**9.** A method according to one of the claims 7 or 8, characterized in that the frequency of the clock signal is an integral multiple of the frequency of said reference signal.

**10.** A method according to one of the claims 7 to 9, characterized in that the frequency of the reference signal is the same as that of the auxiliar signal.

**11.** A method according to one of the claims 7 to 10, characterized in that phase shifting is controlled digitally.

**12.** A method according to one of the claims 7 to 11, characterized in that within one block (A, B, C) the clock signal is distributed to a plurality of subdestinations (AA, AB, AC ... CC).

**Revendications**

**1.** Système d'alimentation en signaux d'horloge utilisé dans un ordinateur central comportant une pluralité de blocs (A,B,C), chacun desdits blocs (A,B,C) étant une destination d'un signal d'horloge, comprenant :
   - des moyens (1205) pour produire un signal d'horloge, qui délivrent un signal d'horloge envoyé auxdits blocs (A,B,C),
   - des premiers moyens diviseurs (1203') fonctionnant en fonction du signal d'horloge de manière à fournir un signal de référence envoyé auxdits blocs (A,B,C) et possédant une fréquence inférieure à celle du signal d'horloge,
   - des premières lignes de transmission de signaux (1206) transmettant ledit signal d'horloge depuis lesdits moyens (1205) servant à produire un signal d'horloge à chacun desdits blocs (A,B,C),
   - des secondes lignes de transmission de signaux (1207) transmettant ledit signal de référence depuis lesdits premiers moyens diviseurs (1203') à chacun desdits blocs (A,B,C),
   - dans chacun desdits blocs (A,B,C), des moyens déphaseurs séparés (1201) servant à appliquer un retard variable à un signal introduit devant être déphasé, en fonction d'un signal de commande de déphasage introduit,

   - dans chacun desdits blocs (A,B,C), des moyens comparateurs de phase séparés (1202) servant à délivrer ledit signal de commande de déphasage en réponse à une relation de phase des signaux introduits;
   dans chacun desdits blocs (A,B,C), les premières lignes de transmission de signaux (1206) étant raccordées aux moyens déphaseurs (1201) de manière à délivrer le signal devant être déphasé pour les moyens déphaseurs (1201), et les secondes lignes de transmission de signaux (1207) étant raccordées à une première entrée des moyens comparateurs de phase (1202) de manière à délivrer un premier signal de ces moyens; caractérisé en ce que
   - la seconde ligne de transmission de signaux (1207) est raccordée avec la même longueur à chaque destination de manière à fixer le même temps de transmission;
   - il est prévu des seconds moyens diviseurs (1203,1803-1805) réalisés au moyen d'un diviseur de fréquence, fonctionnant en fonction du signal de sortie des moyens déphaseurs (1201) et dont la sortie est raccordée à une seconde entrée des moyens comparateurs de phase (1202) de manière à fournir un second signal d'entrée de ces moyens; et
   - le retard appliqué au signal par le circuit à retard variable (1201) est réglé de manière que, sous l'effet du renvoi du résultat de la comparaison exécutée dans les moyens comparateurs de phase (1202) au circuit à retard variable (1201), le signal de sortie des moyens diviseurs de fréquence (1203) est en phase avec le signal transmis par l'intermédiaire de la seconde ligne de transmission de signaux (1207).

**2.** Système d'alimentation en signaux d'horloge selon la revendication 1, caractérisé en ce que lesdits seconds moyens diviseurs (1203,1803-1805) sont formés par un circuit de comptage (1803) et un circuit de verrouillage (1805) raccordé au circuit de comptage, et un circuit décodeur (1804) intercalé entre ces circuits.

**3.** Système d'alimentation en signaux d'horloge selon la revendication 1 ou 2, caractérisé en ce que lesdits premiers moyens diviseurs (1203') délivrent un signal de référence (1207) moyennant une division de la fréquence du générateur de signaux d'horloge (1205) en fonction d'un facteur entier de division égal ou supérieur à deux.

4. Système d'alimentation en signaux d'horloge selon l'une quelconque des revendications 1 à 3, caractérisé en ce que les seconds moyens diviseurs (1203, 1803-1805) produisent un signal possédant la même fréquence que le signal de référence.

5. Système d'alimentation en signaux d'horloge selon l'une des revendications 1 à 4, caractérisé en ce que les moyens déphaseurs (1201,1801) sont commandés numériquement.

6. Système d'alimentation en signaux d'horloge selon l'une des revendications 1 à 5, caractérisé en ce que les moyens déphaseurs (250-270) comprennent les circuits de verrouillage (261-263) de manière à empêcher l'apparition d'impulsions additionnelles lors du déphasage d'un signal d'entrée.

7. Procédé pour produire un signal d'horloge destiné à être utilisé dans un ordinateur principal, ledit ordinateur possédant une pluralité de destinations (A,B,C) de signaux d'horloge, comprenant les étapes consistant à :
   - produire un signal d'horloge (1205) envoyé (1207) auxdites destinations (A,B,C),
   - produire un signal de référence (1203') envoyé auxdites destinations,
   - comparer (1202), dans chacune desdites destinations, ledit signal de référence (1203') à un signal auxiliaire de manière à produire un signal de commande de déphasage,
   - déphaser (1201), dans chacune desdites destinations, le signal d'horloge (1205) en réponse audit signal de commande de déphasage,
     caractérisé en ce que
   - ledit signal de référence (1203') est envoyé (1207) auxdites destinations (A,B,C) en un temps de transmission sensiblement identique,
   - dans chacune desdites destinations, ledit signal auxiliaire est obtenu par division (1203) de la fréquence dudit signal d'horloge (1205) déphasé (1201), et
   - ledit signal d'horloge (1205) est déphasé (1201) de sorte que le signal divisé (1203) est en phase avec ledit signal de référence (1203') dans chacune desdites destinations (A,B,C).

8. Procédé selon la revendication 7, caractérisé en ce que la fréquence dudit signal d'horloge déphasé est divisée par comptage, décodage et verrouillage.

9. Procédé selon l'une des revendications 7 ou 8, caractérisé en ce que la fréquence du signal d'horloge est un multiple entier de la fréquence dudit signal de référence.

10. Procédé selon l'une des revendications 7 à 9, caractérisé en ce que la fréquence du signal de référence est identique à celle du signal auxiliaire.

11. Procédé selon l'une des revendications 7 à 10, caractérisé en ce que le déphasage est commandé numériquement.

12. Procédé selon l'une des revendications 7 à 11, caractérisé en ce que, dans un bloc (A,B,C), le signal d'horloge est réparti entre une pluralité de sous-destinations (AA, AB, AC... CC).

**Patentansprüche**

1. Ein Taktsignal-Lieferungssystem, das in einem eine Mehrzahl von Blöcken (A, B, C) aufweisenden Großrechner verwendet wird, wobei jeder der Blöcke (A, B, C) als Taktsignalziel dient, mit:
   - einer Einrichtung (1205) für die Erzeugung eines Taktsignals, das ein an die Blöcke (A, B, C) geliefertes Taktsignal bereitsstellt,
   - einer ersten Teilereinrichtung (1203'), die in Abhängigkeit vom Taktsignal arbeitet, um ein Refferenzsignal bereitzustellen, das an die Blöcke (A, B, C) geliefert wird und eine niedrigere Frequenz als das Taktsignal besitzt,
   - ersten Signalleitungen (1206), die das Taktsignal von der Einrichtung (1205) für die Erzeugung eines Taktsignals an jeden der Blöcke (A, B, C) übertragen,
   - zweiten Signalleitungen (1207), die das Referenzsignal von der ersten Teilereinrichtung (1203') an jeden der Blöcke (A, B, C) übertragen,
   - getrennten Phasenverschiebungseinrichtungen (1201) in jedem der Blöcke (A, B, C), um entsprechend einem eingegebenen Verschiebungssteuersignal eine variable Verzögerung eines eingegebenen und zu verschiebenden Signals zu erzeugen,

- getrennten Phasenvergleichseinrichtungen (1202) in jedem der Blöcke (A, B, C), um aufgrund einer Phasenbeziehung der eingegebenen Signale ein Verschiebungssteuersignal zu erzeugen;

wobei in jedem der Blöcke (A, B, C) die ersten Signalleitungen (1206) mit den Phasenverschiebungseinrichtungen (1201) verbunden sind, um für die phasenverschiebungseinrichtung ein zu verschiebendes Signal bereitzustellen, und die zweiten Signalleitungen (1207) mit dem jeweils ersten Eingang der Phasenvergleichseinrichtungen (1202) verbunden sind, um für diese ein erstes Signal bereitzustellen,

**dadurch gekennzeichnet, daß**

- die zweite Signalleitung (1207) an jedes Ziel mit der gleichen Länge verlegt ist, um dieselbe Übertragungszeit zu gewährleisten;
- zweite Teilereinrichtungen (1203, 1803 bis 1805), die als Frequenzteiler ausgeführt sind, vorgesehen sind, die in Abhängigkeit von der Ausgabe der jeweiligen Phasenverschiebungseinrichtungen (1201) arbeiten und deren jeweiliger Ausgang mit einem zweiten Eingang der jeweiligen Phasenvergleichseinrichtung (1202) verbunden ist, um für diese ein zweites Eingangssignal bereitzustellen;
- die Signalverzögerungszeit der variablen Verzögerungsschaltung (1201) so eingestellt wird, daß durch die Rückkopplung des Vergleichsergebnisses in der jeweiligen Phasenvergleichseinrichtung (1202) an die variable Verzögerungsschaltung (1201) das Ausgangssignal der jeweiligen Frequenzteilereinrichtungen (1203) mit dem über die zweite Signalleitung (1207) übertragenen Signal in Phase ist.

2. Ein Taktsignal-Lieferungssystem gemäß Anspruch 1, dadurch gekennzeichnet, daß die zweiten Teilereinrichtungen (1203, 1803 bis 1805) jeweils von einer Zählerschaltung (1803) und einer damit verbundenen Auffang-Flipflop-Schaltung (1805) gebildet werden, wobei zwischen diese beiden Schaltungen eine Dekoderschaltung (1804) geschaltet ist.

3. Ein Taktsignal-Lieferungssystem gemäß Anspruch 1 oder 2, dadurch gekennzeichnet, daß die erste Teilereinrichtung (1203) ein Referenzsignal (1207) dadurch erzeugt, daß sie die Frequenz des Taktsignalgenerators (1205) durch einen ganzzahligen Teilungsfaktor, der gleich oder größer als 2 ist, dividiert.

4. Ein Taktsignal-Lieferungssystem gemäß einem der Ansprüche 1 bis 3, dadurch gekennzeichnet, daß die zweiten Teilereinrichtungen (1203, 1803 bis 1805) ein Signal erzeugen, das die gleiche Frequenz wie das Referenzsignal besitzt.

5. Ein Taktsignal-Lieferungssystem gemäß einem der Ansprüche 1 bis 4, dadurch gekennzeichnet, daß die Phasenverschiebungseinrichtungen(1201, 1801) auf digitale Weise gesteuert werden.

6. Ein Taktsignal-Lieferungssystem gemäß einem der Ansprüche 1 bis 5, dadurch gekennzeichnet, daß die Phasenverschiebungseinrichtungen(250 bis 270) Auffang-Flipflop-Schaltungen (261 bis 263) umfassen, um das Auftreten von zusätzlichen Impulsen bei der Verschiebung eines Eingangssignals zu verhindern.

7. Ein Verfahren für die Lieferung eines Taktsignals, das in einem Großrechner verwendet wird, der eine Mehrzahl von Taktsignalzielen (A, B, C) umfaßt, mit den Schritten
    - des Erzeugens eines Taktsignals (1205), das an die Ziele (A, B, C) geliefert wird (1207),
    - des Erzeugens eines Referenzsignals (1203'), das an die Ziele geliefert wird,
    - des Vergleichens (1202) des Referenzsignals (1203') in jedem der Ziele mit einem Hilfssignal, um so ein Verschiebungssteuersignal bereitzustellen,
    - des Verschiebens (1201) des Taktsignals (1205) in jedem der Ziele aufgrund des Verschiebungssteuersignals,
    
    **dadurch gekennzeichnet, daß**
    - das Referenzsignal (1203') an die Ziele (A, B, C) während einer jeweils im wesentlichen gleichen Übertragungszeit geliefert wird (1207),
    - das Hilfssignal in jedem der Ziele dadurch erhalten wird, daß die Frequenz des verschobenen (1201) Taktsignals (1205) geteilt wird (1203), und
    - das Taktsignal (1205) so verschoben wird (1201), daß das geteilte (1203) Signal in jedem der Ziele (A, B, C) mit dem Referenzsignal (1203') in Phase ist.

8. Ein Verfahren gemäß Anspruch 7, dadurch gekennzeichnet, daß die Frequenz des verschobenen Taktsignals durch einen Zählvorgang, einen Dekodierungsvorgang und einen Auffangspeicherungsvorgang geteilt wird.

**9.** Ein Verfahren gemäß einem der Ansprüche 7 oder 8, dadurch gekennzeichnet, daß die Frequenz des Taktsignals ein ganzzahliges Vielfaches der Frequenz des Referenzsignals ist.

**10.** Ein Verfahren gemäß einem der Ansprüche 7 bis 9, dadurch gekennzeichnet, daß die Frequenz des Referenzsignals dieselbe wie die des Hilfssignals ist.

**11.** Ein Verfahren gemäß einem der Ansprüche 7 bis 10, dadurch gekennzeichnet, daß die Phasenverschiebung auf digitale Weise gesteuert wird.

**12.** Ein Verfahren gemäß einem der Ansprüche 7 bis 11, dadurch gekennzeichnet, daß innerhalb eines Blocks (A, B, C) das Taktsignal auf eine Mehrzahl von Unterzielen (AA, AB, AC,...,CC) verteilt wird.

F I G. 1

Blocks: CLOCK SIGNAL OSCILLATOR 1205, DIVIDER 1203', 1206, 1207

Section A, B, C each containing:
VARIABLE DELAY CIRCUIT 1201, PHASE COMPARATOR CIRCUIT 1202, WAVEFORM SHAPING CIRCUIT 1204, FREQUENCY DIVIDER 1203

# F I G. 2

# F I G. 3

F I G. 4

401    402

403

F I G. 5

501    502

503

# F I G. 6

1310      1312

1311      1313

INTEGRATION CIRCUIT

# F I G. 7 A

INPUT AT 1310

INPUT AT 1311

OUTPUT AT 1310

OUTPUT AT 1311

# F I G. 7 B

INPUT AT 1310

INPUT AT 1311

OUTPUT AT 1310

OUTPUT AT 1311

18

# F I G. 8

# F I G. 9

# F I G. 10

# F I G. 11

20

# F I G. 12

OUTPUT OF
VARIABLE DELAY
CIRCUIT

OUTPUT OF
COUNTER CIRCUIT

OUTPUT OF
DECODER CIRCUIT

OUTPUT OF
LATCH CIRCUIT

F I G. 13.

F I G. 14

## F I G. 15 A

2301

C

B

A

2302

t   ≃t

## F I G. 15 B

$$\Delta t = \frac{|t_2 - t_1|}{2}$$

2301

2302

$t_2$

$t_1$

23

# F I G. 16

# F I G. 17

FIG. 18

FIG. 19A

IDEAL VOLTAGE CHANGE

ACTUAL VOLTAGE CHANGE

VOLTAGE

RISE TIME    FALL TIME

TIME

FIG. 19B

IDEAL VOLTAGE CHANGE

VOLTAGE

ACTUAL VOLTAGE CHANGE

TIME

25

# F I G. 20

FIG. 21

# F I G. 22

EP 0 282 735 B1